# FASCICULE DE BREVET EUROPEEN

(11) **EP 3 303 690 B1**
(45) Date de publication et mention de la délivrance du brevet: **03.07.2019**
(21) Numéro de dépôt: 16733648.6
(22) Date de dépôt: 30.05.2016
(51) Int. Cl.: D21C 5/02, D21H 21/08

(54) **PROCÉDÉ DE DÉSENCRAGE DE PAPIER DE RÉCUPÉRATION**
VERFAHREN ZUR DRUCKFARBENENTFERNUNG BEI ALTPAPIER
METHOD FOR DEINKING WASTE PAPER

(30) Priorité: 02.06.2015 FR 1554992
(43) Date de publication de la demande: 11.04.2018
(73) Titulaire: COATEX, 69730 Genay (FR)
(72) Inventeur: DUPONT, François, 69004 Lyon (FR); BLANC, Jérôme, 69530 Brignais (FR)
(74) Mandataire: Balmefrezol, Ludovic Francis Pierre
(86) Numéro de dépôt international: PCT/FR2016/051282
(87) Numéro de publication internationale: WO 2016/193604

(56) Documents cités:
- WO-A1-96/16223
- WO-A1-2011/030003
- US-A- 4 599 190

## Description

### Domaine de l'invention

La présente invention a pour objet un procédé de désencrage, de décoloration, de désinfection et de blanchiment de papiers de récupération. Elle concerne également l'utilisation d'un dispersant spécifique dans un procédé de désencrage comprenant au moins une étape de flottation. Ainsi, l'invention s'adresse à toutes les usines de désencrage utilisant le procédé de flottation par air dispersé (ou circulant).

Le recyclage à grande échelle des papiers et cartons est maintenant une réalité au niveau mondial, puisque les fibres recyclées représentent environ la moitié de la ressource fibreuse nécessaire pour la production mondiale.

Parmi les étapes du procédé de recyclage, le désencrage est appliqué pour le recyclage des papiers imprimés, et vise à éliminer l'encre de la suspension de papiers récupérés.

Les procédés conventionnels de désencrage trouvent leur application dans le traitement de papier de récupération provenant de papiers usagés que l'on veut recycler. Il s'agit notamment de traiter des papiers, tels que des vieux journaux, magazines, illustrés, listings d'ordinateur, formulaires en continu et éventuellement photocopies. Dans le cadre de la présente demande, l'expression « papier de récupération » signifie de façon globale tous types de papiers comportant des fibres de cellulose, des charges minérales et bien entendu de l'encre, cette dernière étant présente en quantité infime par rapport aux charges minérales et aux fibres. Lorsque cette pâte de récupération a été recyclée, elle ne contient plus qu'une quantité très réduite de charges minérales, par exemple moins de 10 % de charges minérales quand initialement la matière sèche du papier de récupération contenait 28 % desdites charges.

Selon la nature du papier à recycler, la part des charges minérales peut ainsi varier de 5 % à de 60 % en poids, le reste étant de la cellulose et des adjuvants de fabrication organiques (latex, amidon, antimousse, colorants...).

### Etat de l'art

Le papier de récupération est mis en suspension dans un dispositif dénommé « pulpeur ». Ce dernier contient un milieu consistant en de l'eau, ledit papier de récupération et au moins un agent de désencrage. On peut également ajouter dans le pulpeur de la soude et du peroxyde d'hydrogène. Cet ensemble est mélangé/malaxé pendant un durée déterminée, afin d'obtenir une pâte dont on va chercher ensuite à éliminer au moins l'encre afin d'obtenir une pâte de récupération recyclée prête à être employée à nouveau, par exemple, dans la fabrication de papier d'impression/écriture.

L'élimination de l'encre du papier de récupération se fait essentiellement par le procédé de flottation par air dispersé (ou circulant). Lorsqu'on ajoute des bulles d'air à cette suspension, ce qui constitue le principe de la flottation, les particules d'encre vont naturellement avoir tendance à s'adsorber à leur interface. Les bulles d'air les transportent ensuite à la surface, formant généralement une mousse concentrée en encre.

De nombreux type d'appareils de flottation existent et sont décrits notamment dans les documents EP 0 674 040, DE 3524071 ou EP 0 305 251.

L'étape de flottation peut être répétée plusieurs fois consécutives, par exemple dans différentes enceintes disposées en ligne, traitant la suspension issue de la précédente enceinte, afin d'obtenir une pâte de récupération présentant le niveau de blancheur attendu. La blancheur d'un papier est définie par la norme internationale ISO 2470-2 : 2008 qui définit cette blancheur par une valeur de 0 à 100, cette dernière valeur définissant une blancheur optimale de la pâte à papier.

Chaque utilisation finale du papier nécessite une blancheur spécifique. Plus la suspension de pâte de récupération subit d'étapes de flottation, plus le niveau de blancheur obtenu est élevé. Néanmoins l'obtention d'un niveau de blancheur élevé se fait au détriment du rendement de recyclage, c'est-à-dire que la quantité de pâte de récupération recyclée diminue lorsque l'on souhaite obtenir une pâte de papier recyclée plus blanche. Autrement dit, pour une quantité donnée m₀ de papier à recycler, on obtiendra une quantité m₁ de pâte de récupération recyclée inférieure à une quantité m₂ si la blancheur désirée pour le papier m₁ est supérieure à la blancheur de la pâte de récupération (recyclée) m₂.

Les étapes successives de flottation entraînent, outre la diminution plus importante des encres (et corrélativement l'obtention d'une blancheur de la pâte de récupération recyclée plus élevée), l'élimination progressive des charges minérales. En effet, les encres sont liées aux charges minérales notamment dans le cas de papiers couchés et l'étape de flottation entraîne tant les encres que les charges minérales dans la phase supérieure (présente classiquement sous forme d'une mousse), cette phase étant extraite afin d'éliminer les encres.

Or, la présence de ces charges minérales à un taux suffisant est nécessaire dans toutes les applications où le papier doit présenter des fonctions ou une texture particulière, tels que par exemple un aspect brillant, une opacité, une certaine masse volumique et une bonne imprimabilité vis-à-vis des différents procédés d'impressions.

A l'heure actuelle, du fait de l'élimination en grande partie des charges minérales, il est nécessaire d'injecter à nouveau lesdites charges à la pâte de récupération recyclée lorsque cette dernière est destinée à de telles applications. Cela représente un coût additionnel conséquent (coût matière et processus d'incorporation), et il serait donc particulièrement opportun de pouvoir, lors du recyclage du papier de récupération, conserver dans la pâte de récupération recyclée les charges minérales en quantité suffisante.

Le document WO 96-16223 divulgue une méthode au cours de laquelle on désencre du papier à impression flexographique. Le papier est désintégré en présence d'une émulsion de particules d'un polymère qui est polymère à caractère hydrophobe donc non-hydrosoluble.

Le document US 4599190 décrit l'utilisation d'un polyélectrolyte dispersant de faible masse moléculaire au cours de méthodes de désencrage secondaire de fibres dans du papier. Cette méthode ne comprend pas d'étape de flottation.

Le document WO 2011-030003 concerne le désencrage exclusif des encres pour impression jet d'encre au moyen d'une enzyme spécifique qui est une laccase. Aucun dispersant polyacrylate n'est utilisé.

Ainsi, il n'existe à l'heure actuelle aucun système apte à éliminer les encres, tout en conservant une quantité suffisante des charges minérales dans la pâte de récupération. La demanderesse entend proposer une solution pour combler cette lacune.

### Brève description de l'invention

Dans le cadre de la présente invention, il a été mis en évidence qu'il est possible, lors de l'étape de flottation, de séparer les charges minérales des encres et de permettre par ailleurs, que ces dernières soient préférentiellement amenées dans la phase supérieure destinée à être extraite. L'invention réside notamment dans l'utilisation d'un dispersant spécifique, de type polyacrylate, utilisé dans des proportions déterminées, qui favorise la rétention des charges minérales dans la phase inférieure (conservée) lors de la flottation tout en laissant les encres se disposer dans la phase supérieure (extraite ou éliminée).

Cela est particulièrement avantageux compte tenu du fait que l'homme du métier sait que les encres et les charges minérales sont fixées les unes aux autres dans la pâte de récupération.

Par ailleurs, la nature des encres est extrêmement variable, plus précisément les différents types d'encres présentent tantôt un caractère hydrophile (encres à eau, par exemple de type flexo ou jet d'encre) tantôt un caractère hydrophobe (telles que les encres offset, héliogravure ou toner). Ainsi, il est avantageux qu'un tel dispersant soit capable de séparer les encres et les charges minérales initialement fixées entre elles tout en étant apte à maintenir dans la phase inférieure (conservée) de la flottation les seules charges minérales.

Outre cette capacité à séparer les encres et les charges minérales dans les deux phases distinctes créées lors de la flottation, la présente invention permet également d'améliorer très significativement le rendement du recyclage (masse de pâte de récupération recyclée, au regard de la masse initiale de papier de récupération, considérant un niveau de blancheur à atteindre).

Ainsi, la présente invention concerne un procédé de désencrage de papier de récupération, comprenant :
- une étape de pulpage consistant à mettre en suspension ledit papier de récupération avec au moins de l'eau pour former une pâte, puis
- une étape de flottation consistant à faire circuler des bulles d'air dans au moins une enceinte accueillant ladite pâte, diluée en solution aqueuse, de sorte à constituer deux phases adjacentes, la phase supérieure contenant l'encre et étant destinée à être évacuée,
- une étape d'introduction d'au moins un agent de désencrage au cours de l'étape de pulpage et/ou de l'étape de flottation,
ledit procédé comprenant en outre une étape d'introduction d'au moins un dispersant de type polyacrylate, en une quantité variant entre 0,05 % et 3,5 % en poids par rapport au poids des charges minérales du papier de récupération.

Il est entendu ici que l'expression « papier de récupération » décrit tous types de papier comprenant des fibres de cellulose, des charges minérales et des encres.

On entend par l'expression « charges minérales » tous les éléments inorganiques destinés à opacifier les papiers (indice de réfraction supérieur à la cellulose), améliorer l'imprimabilité et/ou diminuer les coûts de fabrication du papier (moindre énergie de séchage, coût de la matière moins élevé), tels que le carbonate de calcium, l'oxyde de titane, le kaolin et/ou le talc.

Par «dispersant de type polyacrylate », on entend un polymère de l'acide (méth)acrylique ayant une fonction dispersante lorsqu'il est ajouté à une suspension comportant des charges minérales. Le dispersant selon la présente invention est plus précisément défini ci-après.

D'autres caractéristiques avantageuses de l'invention sont précisées dans la suite :
- selon un mode de réalisation, au moins une partie dudit dispersant de type polyacrylate est introduit au cours de l'étape de pulpage ;
- selon un mode de réalisation, plus de la moitié du susdit dispersant est introduit au cours de l'étape dite de flottation, par exemple le dispersant est introduit intégralement au cours de ladite étape de flottation ;
- selon un mode de réalisation, ledit dispersant de type polyacrylate présente une masse moléculaire comprise entre 2 000 g.mol⁻¹ et 100 000 g.mol⁻¹, de préférence entre 3 000 g.mol⁻¹ et 10 000 g.mol⁻¹, telle que déterminée par CES ;
- selon un mode de réalisation, ledit dispersant est introduit au cours de l'étape de pulpage en une quantité variant entre 0,25 % et 3 % en poids par rapport au poids des charges minérales du papier de récupération, de préférence entre 0,8 % et 2 % en poids par rapport au poids des charges minérales dudit papier ;
- selon un mode de réalisation, au cours de l'étape de pulpage, on ajoute également de la soude et/ou du peroxyde d'hydrogène ;
- selon un mode de réalisation, le dispersant de type polyacrylate est un homopolymère de l'acide acrylique, éventuellement sous forme neutralisée.

Ces différents modes de réalisation peuvent être combinés entre eux.

En outre, l'invention porte sur l'utilisation d'un dispersant de type polyacrylate au cours d'un procédé de désencrage de papier de récupération, ledit dispersant étant introduit au cours du procédé en une quantité variant entre 0,05 % et 3,5 %, en poids par rapport au poids des charges minérales du papier de récupération.

Selon un mode de réalisation, ledit procédé de désencrage comprend une étape de pulpage, une étape de flottation, une étape d'introduction d'au moins un agent de désencrage, ledit dispersant de type polyacrylate étant introduit au cours de l'étape de pulpage.

Selon un mode de réalisation, ledit dispersant est introduit au cours du procédé en une quantité variant entre 0,25 % et 3 % en poids par rapport au poids des charges minérales du papier de récupération.

### Description détaillée de l'invention

S'agissant de l'agent de désencrage, ce dernier consiste en un ou plusieurs agents moussants connus de l'homme du métier tels que par exemple un savon d'acide gras notamment de type stéarique ou oléique, un acide gras ou un mélange d'acides gras, un tensio-actif non ionique de type alcool gras éthoxylé et/ou propoxylé, un tensio-actif non ionique de type acide gras éthoxylé et/ou propoxylé, diverses mélanges de tensioactifs et d'acides gras pouvant également être associés à des enzymes, des dérivés de type organo-siloxane modifiés.

S'agissant du dispersant utilisé dans le cadre de l'invention, il s'agit de polymères obtenus à partir de monomères acryliques. Le monomère acrylique est choisi parmi l'acide acrylique, l'acide méthacrylique et leurs mélanges. Ainsi, le polymère polyacrylate obtenu pourra être un homopolymère ou un copolymère. Il s'agit d'un polymère hydrosoluble et non d'une émulsion polymérique.

Par « homopolymère ou copolymère de l'acide (méth)acrylique », on entend soit un polymère constitué exclusivement d'acide acrylique (homopolymère d'acide acrylique), soit un polymère constitué exclusivement d'acide méthacrylique (homopolymère d'acide méthacrylique) ou alternativement un polymère constitué d'un mélange d'acide acrylique et d'acide méthacrylique (copolymère acide acrylique-acide méthacrylique) et éventuellement d'au moins une autre unité monomérique. Dans le cas d'un copolymère acide acrylique-acide méthacrylique, selon un aspect de l'invention, le ratio molaire entre les monomères d'acide acrylique et les monomères d'acide méthacrylique peut varier entre 1:100 et 100:1, par exemple entre 1:1 et 100:1 ou entre 1:1 et 50:1.

Ledit monomère peut être partiellement neutralisé. Ainsi, dans une variante de réalisation, 2 % à 50 % en poids du monomère d'acide (méth)acrylique, par rapport au poids total du monomère d'acide (méth)acrylique introduit, est neutralisé. Il peut l'être au moyen d'un seul agent de neutralisation ou de plusieurs agents de neutralisation. Le monomère peut être par exemple partiellement neutralisé au moyen d'un hydroxyde alcalin ou alcalino-terreux, d'un oxyde alcalino-terreux, et/ou avec une amine. On peut citer à titre d'exemple l'hydroxyde de sodium, de potassium, de lithium, de calcium, de magnésium, l'oxyde de calcium, l'oxyde de potassium.

Par ailleurs, le copolymère selon l'invention peut également comprendre, en outre, un ou plusieurs autre(s) monomère(s) éthyléniquement insaturé(s) choisi(s) dans le groupe consistant en l'acide 2-acrylamido-2-méthylpropane sulfonique (AMPS), l'acide maléique, l'acide fumarique, l'acide crotonique, l'acide itaconique, les télomères insaturés de l'acide acrylique, les monomères de formule (I) : 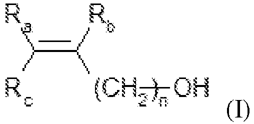 dans laquelle :
- Rₐ, R_{b} et R_{c} représentent, indépendamment les uns des autres, H ou CH₃,
- n est un entier variant entre 0 et 2 (c'est-à-dire 0, 1 ou 2).

En particulier, le monomère peut être l'alcool allylique (n=1), l'alcool méthallylique (n=1), l'isoprénol (n=2). Avantageusement, on utilise l'isoprénol.

Par « télomères insaturés de l'acide acrylique », on entend des oligomères d'acide acrylique ou d'acide acryloxypropionique, de formule (II) : 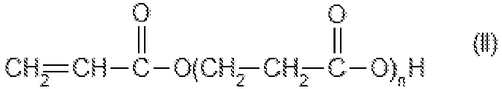 où n est un entier variant de 1 à 10. Ces différents oligomères peuvent être en mélange. Lorsque n = 1, l'oligomère est un dimère d'acide acrylique.

En présence d'autre(s) monomère(s) insaturé(s), selon un aspect de l'invention, le ratio molaire entre les monomères d'acide (méth)acrylique et autre(s) monomère(s) insaturé(s) peut varier entre 1:1 et 100:1, par exemple entre 1:1 et 75:1 ou entre 1:1 et 50:1.

D'autres constituants chimiques peuvent être ajoutés lors du procédé de désencrage, tels que la soude, l'eau oxygénée, le silicate de sodium et le savon.

Outre l'utilisation d'un dispersant spécifique, dans des proportions particulières au cours d'une étape du procédé de désencrage, le procédé selon l'invention est connu de l'homme du métier. Plus particulièrement, le papier de récupération passe par un pulpeur, une pluralité d'épurateurs et de postes de classage, disposés à différents endroits le long de la chaine de désencrage, ayant pour fonction respective d'évacuer les particules lourdes et de tailles importantes, ainsi qu'au moins une - classiquement une pluralité - cellule ou enceinte de flottation. Ainsi, le procédé de désencrage selon l'invention utilise les postes et matières utilisés habituellement, sans les modifier, mais l'invention est adaptée à la technique de flottation et non à celle du lavage.

### EXEMPLES

Dans la suite sont présentés une pluralité d'essais qui ont mis en évidence l'invention par rapport à l'état de la technique ainsi que ses diverses particularités. Par souci de concision et de clarté, seuls quelques résultats sont présentés mais il est bien entendu que la demanderesse a conduit de nombreux autres essais et tests afin d'appréhender et d'évaluer le cadre de l'invention telle que définie ici.

### Composés utilisés dans les essais :

**XP 1831** (selon l'invention) : dispersant de type polyacrylate constitué de 100 % d'acide acrylique, de masse moléculaire 4 000 g/mol (tel que déterminé par CES), obtenu par des procédés classiques de polymérisation radicalaire.
**ET₁** (hors invention) : polymère de type peigne constitué de chaînes pendantes de type poly(éthylène glycol) de poids moléculaire d'environ 50 000 g.mol⁻¹.
**ET2** (hors invention) : polymère de type peigne constitué de chaînes pendantes de type poly(éthylène glycol) de poids moléculaire d'environ 100 000 g.mol⁻¹.
**ET3** (hors invention) : Tripolyphosphate de potassium (TSPP).
**Liptol**® **S100** : agent de désencrage consistant en un tensio-actif de type alcool gras éthoxylé/propoxylé commercialisé par la société CECA.

### Masse moléculaire (ou poids moléculaire) Mw du dispersant de type polyacrylate selon l'invention :

Une telle technique met en oeuvre un appareil de chromatographie liquide de marque WATERS™ doté d'un détecteur. Ce détecteur est un détecteur de concentration réfractométrique de marque WATERS™.
Cet appareillage de chromatographie liquide est doté d'une colonne d'exclusion stérique convenablement choisie par l'homme du métier afin de séparer les différents poids moléculaires des polymères étudiés. La phase liquide d'élution est une phase aqueuse ajustée à pH 9 par de la soude 1N contenant 0,05M de NaHCO₃, 0,1M de NaNO₃, 0,02M de triétanolamine et 0,03 % de NaN₃.
De manière détaillée, selon une première étape, on dilue à 0,9 % sec la solution de polymérisation dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05M de NaHCO₃, 0,1M de NaNO₃, 0,02M de triétanolamine et 0,03 % de NaN3).

L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivantes : une précolonne de type GUARD COLUMN ULTRAHYDROGEL WATERS™ de 6 cm de long et 40 mm de diamètre intérieur, et une colonne linéaire de type ULTRAHYDROGEL WATERS™ de 30 cm de long et 7,8 mm de diamètre intérieur. Le système de détection quant à lui se compose d'un détecteur réfractométrique de type RI WATERS™ 410. Le four est porté à la température de 60°C, et le réfractomètre est porté à la température de 45°C.
L'appareil de chromatographie est étalonné par des étalons de polyacrylate de sodium en poudre de différentes masses moléculaires certifiées par le fournisseur : POLYMER STANDARD SERVICE ou AMERICAN POLYMER STANDARDS CORPORATION.

Le protocole d'essai a consisté à ajouter ces produits en complément d'une recette de référence incluant un agent de désencrage et en effectuant l'ajout du dispersant, soit au niveau du pulpeur (milieu « concentré » à 27 % de matière sèche dans l'eau) soit au niveau d'une cellule/enceinte de flottation (milieu « dilué » à 1 % de matière sèche dans l'eau).

Dans le cadre de ces essais, on utilise un pulpeur de laboratoire modèle HSM10 de marque Hobart® et une cellule/enceinte de flottation Delta® 25 de la société Voith.

Les matières premières considérées sont identiques pour tous les essais afin de vérifier que ce paramètre (matières premières) n'influe pas les résultats. Il s'agit d'un mélange à base de journaux (45 %) et magazines hebdomadaires (55 %) afin d'obtenir un mélange à taux de charges minérales assez élevé, de l'ordre de 28 % de la matière sèche (le papier contient classiquement 10 % d'eau, cette dernière ayant été évacuée par déshydratation du susdit mélange dans une étuve).

De la même manière, des éléments chimiques, de nature et en quantité identiques pour tous les essais, ont été introduits dans le pulpeur, à savoir :
- de la soude NaOH à raison de 6 kg de produit pur par tonne de papier de récupération,
- du silicate de sodium à raison de 18 kg de produit commercial par tonne de papier de récupération,
- du peroxyde d'hydrogène à raison de 7 kg de produit pur par tonne de papier de récupération,
- du Liptol S100 à raison de 0,5 kg de produit commercial par tonne de papier de récupération.

On notera ici que les essais ont été réalisés avec un autre agent de désencrage, en l'espèce un mélange d'alcool gras éthoxylé-propoxylé et d'acide gras de type oléique, et ont montré des résultats analogues à ceux observés avec le Liptol S100.

### Tests effectués :

On réalise le procédé de désencrage selon l'invention en testant les différents dispersants susvisés en les introduisant une première fois à l'étape de pulpage et dans un second essai à l'étape de flottation. Pour tous les essais, on considère que l'on doit obtenir une blancheur de la pâte de récupération recyclée de 56 et 59 et pour chacun de ces deux niveaux de blancheur on détermine le rendement, c'est-à-dire la quantité de pâte de récupération recyclée (à la blancheur désirée) par rapport à la quantité initiale de fibres celluloses présentes dans la matière sèche de papier de récupération (le résultat est exprimé en pourcentage).

Il est rappelé ici que la matière sèche correspond essentiellement aux fibres de cellulose et aux charges minérales (ainsi que les encres), c'est-à-dire au poids du papier de récupération auquel a été enlevé l'eau et toutes les autres matières annexes (plastiques, agrafes etc.). La matière sèche correspond à la partie du papier de récupération qui est placée dans le pulpeur.

Les essais sont menés en laboratoire en utilisant à chaque fois 250 grammes de papier de récupération (soit, considérant 10 % d'eau présente, 225 g de matière sèche). Afin de déterminer le temps nécessaire, lors de l'étape de flottation, pour obtenir le niveau de blancheur souhaitée (soit 56, soit 59), on réalise, pour chaque essai, un premier test au cours duquel on prélève toutes les minutes un échantillon dont on mesure ensuite la blancheur. Une fois le temps de flottation déterminé pour chacun des essais, on reproduit le test en laissant la flottation se poursuivre jusqu'à obtenir la blancheur de 56, puis une seconde fois jusqu'à obtenir la blancheur de 59. On obtient alors le rendement en déterminant la quantité de matière récupérée (pâte de récupération recyclée) au regard de la quantité de matière sèche initialement présente, soit de l'ordre de 140 à 160 grammes puisque les rendements sont de l'ordre de 60 % à 70 % environ.

Dans le tableau ci-dessous, les quantités de dispersants sont indiquées en pourcentage de poids des charges minérales du papier de récupération, comme cela est pratiqué traditionnellement pour le dosage de l'agent de désencrage.

### Résultats des tests réalisés sur les éprouvettes des différentes formulations :

Outre les essais présentés dans le tableau ci-dessous, des tests complémentaires ont permis de mettre en évidence que le poids moléculaire du dispersant selon l'invention a une influence sur son efficacité. Ainsi, il a été mis en évidence que le dispersant selon l'invention devait présenter un poids moléculaire compris entre 2 000 g.mol⁻¹ et 100 000 g.mol⁻¹ (gramme par mole) et de préférence (gain en rendement) compris entre 3 000 g.mol⁻¹ et 10 000 g.mol⁻¹.

Par ailleurs, grâce au procédé selon l'invention, plus de 35 %, voire plus de 40 %, des charges minérales présentes dans le papier de récupération sont conservées dans la pâte de récupération recyclée.

| Essais | XP 1831 | ET₁ | ET₂ | ET₃ | Rendement (blancheur 56), étape de pulpage | Rendement (56), étape de flottation | Rendement (59), étape de pulpage | Rendement (59), étape de flottation |
|---|---|---|---|---|---|---|---|---|
| 1 | 0,05 | | | | 67.9 | 65.7 | 61.8 | 59.8 |
| 2 | 0,15 | | | | 70.1 | 67.8 | 64.2 | 62.1 |
| 3 | 0,25 | | | | 73 | 70.6 | 68.3 | 66.0 |
| 4 | 0,35 | | | | 75.4 | 72.90 | 70.1 | 67.8 |
| 5 | 0,9 | | | | 77.3 | 74.7 | 71.5 | 69.1 |
| 6 | 1,1 | | | | 77.5 | 74.90 | 71.6 | 69.2 |
| 7 | 1,8 | | | | 77.4 | 74.8 | 70.2 | 67.9 |
| 8 | 2,3 | | | | 75.9 | 73.4 | 69.8 | 67.5 |
| 9 | 2,9 | | | | 72.9 | 70.5 | 67.9 | 65.6 |
| 10 | 3,2 | | | | 69.1 | 66.8 | 63 | 60.9 |
| 11 | | 0,9 | | | 66.5 | 63.4 | 60.2 | 58.3 |
| 12 | | | 0,9 | | 66.1 | 63.3 | 59.7 | 57.3 |
| 13 | | | | 0,9 | 66.2 | 63.0 | 60.4 | 58.0 |
| 14 | Aucun dispersant | | | | 67.6 | 65.4 | 61.5 | 59.5 |

## Revendications

1. Procédé de désencrage de papier de récupération, comprenant :
- une étape de pulpage consistant à mettre en suspension ledit papier de récupération avec au moins de l'eau pour former une pâte, puis
- une étape de flottation consistant à faire circuler des bulles d'air dans au moins une enceinte accueillant ladite pâte, diluée en solution aqueuse, de sorte à constituer deux phases adjacentes, la phase supérieure contenant l'encre et étant destinée à être évacuée,
- une étape d'introduction d'au moins un agent de désencrage au cours de l'étape de pulpage et/ou de l'étape de flottation,
ledit procédé comprenant en outre une étape d'introduction d'au moins un dispersant de type polyacrylate, en une quantité variant entre 0,05 % et 3,5 % en poids par rapport au poids des charges minérales du papier de récupération.

2. Procédé selon la revendication 1, selon lequel au moins une partie dudit dispersant de type polyacrylate est introduit au cours de l'étape de pulpage.

3. Procédé selon les revendications 1 ou 2, selon lequel ledit dispersant de type polyacrylate présente une masse moléculaire comprise entre 2 000 g.mol⁻¹ et 100 000 g.mol⁻¹, de préférence entre 3 000 g.mol⁻¹ et 10 000 g.mol⁻¹, telle que déterminée par CES.

4. Procédé selon l'une quelconque des revendications précédentes, selon lequel ledit dispersant est introduit au cours de l'étape de pulpage en une quantité variant entre 0,25 % et 3 % en poids par rapport au poids des charges minérales du papier de récupération, de préférence entre 0,8 % et 2 % en poids par rapport au poids des charges minérales dudit papier.

5. Procédé selon l'une quelconque des revendications précédentes, selon lequel, au cours de l'étape de pulpage, on ajoute également de la soude et/ou du peroxyde d'hydrogène.

6. Procédé selon l'une quelconque des revendications précédentes, selon lequel le dispersant de type polyacrylate est un homopolymère de l'acide acrylique, éventuellement sous forme neutralisée.

7. Utilisation d'un dispersant de type polyacrylate au cours d'un procédé de désencrage de papier de récupération, ledit dispersant étant introduit au cours du procédé en une quantité variant entre 0,05 % et 3,5 %, en poids par rapport au poids des charges minérales du papier de récupération.

8. Utilisation selon la revendication 7, selon laquelle ledit procédé de désencrage comprend une étape de pulpage, une étape de flottation, une étape d'introduction d'au moins un agent de désencrage, ledit dispersant de type polyacrylate étant introduit au cours de l'étape de pulpage.

9. Utilisation selon la revendication 7 ou 8, selon laquelle ledit dispersant est introduit au cours du procédé en une quantité variant entre 0,25 % et 3 % en poids par rapport au poids des charges minérales du papier de récupération.

## Patentansprüche

1. Verfahren zur Druckfarbentrennung (Deinking) von Altpapier, mit:
- einer Pulpierungsphase, die darin besteht, dieses Altpapier mindestens mit Wasser aufzuschwemmen, zur Bildung einer Paste, sowie
- einer Flotationsphase, die darin besteht, Luftbläschen in mindestens einem Behälter mit dieser Paste in Umlauf zu bringen, die in einer wässrigen Lösung aufgelöst wird, sodass zwei aneinandergrenzende Phasen gebildet werden, wobei die obere Phase Tinte enthält und entsorgt werden soll,
- einer Zuführungsphase mindestens eines Deinking-Mittels in der Pulpierungs- und/oder Flotationsphase,
wobei dieses Verfahren eine zusätzliche Zuführungsphase mindestens eines Polyacrylat-Dispergiermittels in einer variierenden Menge zwischen 0,05 und 3,5 Gew.-% im Verhältnis zum Gewicht der mineralischen Füllstoffe des Altpapiers umfasst.

2. Verfahren nach Anspruch 1, bei dem mindestens ein Teil dieses Polyacrylat-Dispergiermittels in der Pulpierungsphase zugeführt wird.

3. Verfahren nach einem der Ansprüche 1 oder 2, bei dem dieses Polyacrylat-Dispergiermittel eine Molmasse zwischen 2.000 g.mol⁻¹ und 100.000 g.mol⁻¹, vorzugsweise zwischen 3.000 g.mol⁻¹ und 10.000 g.mol⁻¹, wie durch Größenausschluss-Chromatographie (SEC) ermittelt, aufweist.

4. Verfahren nach einem der vorstehenden Ansprüche, bei dem dieses Dispergiermittel in der Pulpierungsphase in einer variierenden Menge zwischen 0,25 und 3 Gew.-% im Verhältnis zum Gewicht der mineralischen Füllstoffe des Altpapiers, vorzugsweise zwischen 0,8 und 2 Gew.-% im Verhältnis zum Gewicht der mineralischen Füllstoffe des Altpapiers, zugeführt wird.

5. Verfahren nach einem der vorstehenden Ansprüche, bei dem in der Pulpierungsphase ebenfalls Natron und/oder Wasserstoffperoxid hinzugefügt wird.

6. Verfahren nach einem beliebigen der vorstehenden Ansprüche, wobei das Polyacrylat-Dispergiermittel ein Homopolymer der Acrylsäure, eventuell in neutralisierter Form, ist.

7. Verwendung eines Polyacrylat-Dispergiermittels für das Verfahren zur Druckfarbentrennung (Deinking) von Altpapier, wobei dieses Dispergiermittel während des Verfahrens in einer variierenden Menge zwischen 0,05 und 3,5 Gew.-% im Verhältnis zum Gewicht der mineralischen Füllstoffe des Altpapiers zugeführt wird.

8. Verwendung nach Anspruch 7, bei der dieses Deinking-Verfahren eine Pulpierungsphase, eine Flotationsphase, eine Zuführungsphase mindestens eines Deinking-Mittels umfasst, wobei das Polyacrylat-Dispergiermittel in der Pulpierungsphase zugeführt wird.

9. Verwendung nach Anspruch 7 oder 8, bei der dieses Dispergiermittel während des Verfahrens in einer variierenden Menge zwischen 0,25 und 3 Gew.-% im Verhältnis zum Gewicht der mineralischen Füllstoffe des Altpapiers zugeführt wird.

## Claims

1. Method for deinking recycled paper, comprising:
- a pulping step consisting of putting said recycled paper into suspension with at least water to form a pulp, then
- a flotation step consisting of circulating air bubbles in at least one chamber receiving said pulp, diluted in aqueous solution, so as to constitute two adjacent phases, the upper phase containing ink and intended to be removed,
- a step of introducing at least one deinking agent during the pulping step and/or the flotation step,
said method further comprising a step of introducing at least one dispersant of polyacrylate type, in an amount varying between 0.05 and 3.5 by wt% relative to the weight of the mineral fillers of the recycled paper.

2. Method according to claim 1, wherein at least one part of said dispersant of polyacrylate type is introduced during the pulping step.

3. Method according to claims 1 or 2, wherein said dispersant of polyacrylate type has a molecular mass between 2000 g.mol⁻¹ and 100 000 g.mol⁻¹, preferably between 3000 g.mol⁻¹ and 10 000 g.mol⁻¹, as determined by SEC.

4. Method according to any one of the preceding claims, wherein said dispersant is introduced during the pulping step in an amount varying between 0.25 and 3 by wt% relative to the weight of the mineral fillers of the recycled paper, preferably between 0.8 and 2 by wt% relative to the weight of the mineral fillers of said paper.

5. Method according to any one of the preceding claims, wherein soda and/or hydrogen peroxide are also added during the pulping step.

6. Method according to any one of the preceding claims, wherein the dispersant of polyacrylate type is an acrylic acid homopolymer, optionally in neutralized form.

7. Use of a dispersant of polyacrylate type in a method for deinking recycled paper, said dispersant being introduced during the method in an amount varying between 0.05 and 3.5 by wt% relative to the weight of the mineral fillers of the recycled paper.

8. Use according to claim 7, wherein said method for deinking comprises a pulping step, a flotation step, a step of introducing at least one deinking agent, said dispersant of polyacrylate type being introduced during the pulping step.

9. Use according to claim 7 or 8, wherein said dispersant is introduced during the method in an amount varying between 0.25 and 3 by wt% relative to the weight of the mineral fillers of the recycled paper.
